# EUROPÄISCHE PATENTSCHRIFT

(11) **EP 3 392 085 B1**
(45) Veröffentlichungstag und Bekanntmachung des Hinweises auf die Patenterteilung: **08.06.2022**
(21) Anmeldenummer: 17167433.6
(22) Anmeldetag: 20.04.2017
(51) Int. Cl.: B60P 3/20

(54) **NUTZFAHRZEUGANHÄNGER**
COMMERCIAL VEHICLE TRAILER
REMORQUE DE VÉHICULE UTILITAIRE

(43) Veröffentlichungstag der Anmeldung: 24.10.2018
(73) Patentinhaber: Schmitz Cargobull AG, 48341 Altenberge (DE)
(72) Erfinder: HONKOMP, Dieter, 49439 Steinfeld (DE)
(74) Vertreter: Baur & Weber Patentanwälte PartG mbB

(56) Entgegenhaltungen:
- EP-A2- 2 708 389
- WO-A1-2015/013577
- DE-A1-102005 025 622
- US-A1- 2016 082 791

## Beschreibung

Aus dem allgemeinen Stand der Technik ist es bekannt, Nutzfahrzeuganhänger mit einem Kühlgerät auszustatten, um einen Frachtraum zum Transport verderblicher Waren mit einer Kühlwirkung zu versehen. Dazu werden Kühlgeräte typischerweise an einer in Hauptfahrtrichtung befindlichen Vorderseite befestigt, wobei Kühlluft über entsprechende Öffnungen in den Frachtraum gelangt. Auf gegenüberliegenden Seiten können Türen oder Ladebordwände angeordnet sein, die ein Beladen derartiger Nutzfahrzeuganhänger ermöglichen. Alternativ oder zusätzlich können auch seitliche Öffnungen vorgesehen sein.

Kühlgeräte für Nutzfahrzeuge sind aus dem Stand der Technik bekannt. So ist in der EP 2 799 264 A1 ein Nutzfahrzeug für den Transport von temperaturgeführtem Transportgut beschrieben. Das Nutzfahrzeug weist dabei einen Aufbau, der einen das Transportgut aufnehmenden Laderaum umgibt, eine Kältemaschine, die temperierte Luft in den Laderaum abgibt und eine Steuereinrichtung umfasst, die die Kältemaschine steuert, und eine zentrale Datenverarbeitungseinrichtung auf, die Betriebsparameter des Nutzfahrzeugs erfasst, verarbeitet oder abspeichert. Die Steuereinrichtung der Kältemaschine ist mit der Datenverarbeitungseinrichtung des Nutzfahrzeugs über eine Datenverbindung zur Übertragung von Daten verbunden. Die Steuereinrichtung steuert die Kältemaschine in Abhängigkeit von Daten, die die Datenverarbeitungseinrichtung der Steuereinrichtung über die Datenverbindung zur Verfügung stellt.

Moderne Nutzfahrzeuganhänger sind typischerweise mit elektronischen Bremssteuereinrichtungen ausgestattet, bei denen anhängerseitig beispielsweise die Drehgeschwindigkeiten einzelner Räder aufgenommen werden, um daraus Steuersignale für das Bremssystem abzuleiten bzw. kritische Fahrsituationen erkennen zu können. Eine derartige elektronische Bremssteuereinrichtung wird typischerweise sowohl zugfahrzeug- als auch anhängerseitig mittels einer standardisierten Übertragungsschnittstelle ausgestattet, so dass Daten zwischen dem Zugfahrzeug und dem Nutzfahrzeuganhänger ausgetauscht werden können. Dabei ist es auch möglich, eine derartige elektronische Bremssteuereinrichtung mit weiteren Steuereinheiten zu verbinden.

Aus der EP 2 708 389 A2 ist für einen Anhänger ein Funktionssteuerungssystem zur automatischen Niveauregulierung bekannt. Das System umfasst eine elektronische Steuereinheit zum Steuern der Höhe des Anhängers und Kommunikationsmittel zum Empfangen von Daten über die Höhe des Anhängers. Im Gebrauch überträgt das Kommunikationsmittel Daten an das elektronische Steuergerät und das elektronische Steuergerät vergleicht die tatsächliche Anhängerhöhe mit den empfangenen Daten über die Anhängerhöhe. Wenn die tatsächliche Anhängerhöhe von der empfangenen Datenanhängerhöhe abweicht, passt das elektronische Steuergerät die Anhängerhöhe an die empfangene Datenanhängerhöhe an.

In der WO 2015/013577 A1 werden Verfahren und Systeme zur Steuerung der Erfassung und Speicherung von Daten zur Steuerung eines Kühlgerätes beschrieben. Im Allgemeinen beinhaltet das System eine Mensch-Maschine-Schnittstelle (HMI), und das HMI beinhaltet eine Schnittstelle, die zum Empfangen und Verbinden mit einem externen Gerät konfiguriert ist, und den Einsatz einer externen Speichervorrichtung, die beispielsweise gesammelte Daten und/oder analysierte Daten speichern kann.

Aus der DE 10 2005 025 622 A1 ist eine Fahrzeuganhängeranordnung mit einer Bremssteuereinrichtung bekannt, die mit einer weiteren programmierbaren Steuereinrichtung über wenigstens einen Signalpfad verbunden ist. Hierdurch lassen sich von einem Benutzer kommandierbare Funktionen im Anhänger aus Betriebszustandsgrößen wie Geschwindigkeit, Neigung, Beladung des Anhängers verknüpfen und für unterschiedliche Funktionen sich entsprechende Sicherheitskriterien definieren. Dazu kann eine solche weitere programmierbare Steuereinrichtung sowohl mit einem anhängerseitigen Steuermodul als auch mit einem tragbaren Bedienmodul ausgestattet sein.

Der Erfindung liegt die Aufgabe zugrunde, den Gebrauch eines Nutzfahrzeuganhängers für einen Benutzer weiter zu verbessern, indem eine einfache Bedienmöglichkeit geschaffen wird.

Diese Aufgabe wird durch die Merkmale des Patentanspruchs 1 gelöst. Vorteilhafte Weiterbildungen der Erfindung sind in den Unteransprüchen angegeben. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Demnach ist es möglich, einen Nutzfahrzeuganhänger so mit einer Steuereinheit zu versehen, dass je nach vorgesehenem Übertragungsprotokoll Daten über entsprechende drahtgebundene Schnittstellen bidirektional übertragen werden können. So ist es beispielsweise vorgesehen, Sensordaten, die in großer Zahl bereitgestellt werden und die mittels einer wenig aufwändigen Ansteuerung ansprechbar sind, aus Kostengründen mit einem wenig komplexen Übertragungsprotokoll mit der Steuereinheit zu verbinden. Andere, komplexere Übertragungen werden beispielsweise über die erste Schnittstelle angesteuert, so dass je nach Sensor- oder Aktuatortyp eine geeignete Schnittstelle ausgewählt werden kann.

Gemäß einer Ausführungsform der Erfindung sind als erste Schnittstelle ein CAN-Bus und als zweite Schnittstelle ein LIN-Bus oder ein ONE-WIRE-Bus vorgesehen.

Gemäß einer weiteren Ausführungsform der Erfindung sind darüber hinaus weitere drahtgebundene Schnittstellen vorgesehen.

Gemäß einer weiteren Ausführungsform der Erfindung sind darüber hinaus eine oder mehrere Drahtlos-Schnittstellen an der Steuereinheit vorgesehen.

Gemäß einer Ausführungsform der Erfindung sind als erste Schnittstelle ein CAN-Bus und als zweite Schnittstelle ein LIN-Bus oder ein ONE-WIRE-Bus vorgesehen.

Gemäß einer weiteren Ausführungsform der Erfindung sind darüber hinaus weitere drahtgebundene Schnittstellen vorgesehen.

Gemäß einer weiteren Ausführungsform der Erfindung sind darüber hinaus eine oder mehrere Drahtlos-Schnittstellen an der Steuereinheit vorgesehen.

Gemäß einer weiteren Ausführungsform der Erfindung arbeitet die Drahtlos-Schnittstelle nach einem WLAN- oder GSM-Protokoll oder ist zur Übertragung von Sensordaten im ISM-Band vorgesehen.

Gemäß einer weiteren Ausführungsform der Erfindung sind die Sensoreinheiten als ein oder mehrere Temperatursensoren, als Koppelsensor, als Türsensor, als Füllstandssensor, als Reifendrucksensor oder als Verschleißsensor für Bremsbeläge bereitgestellt.

Gemäß einer weiteren Ausführungsform der Erfindung ist die Aktuatoreinheit über die Steuereinheit aktivierbar.

Gemäß einer weiteren Ausführungsform der Erfindung ist die Aktuatoreinheit eine Hecktürverriegelung.

Gemäß einer weiteren Ausführungsform der Erfindung ist die Steuereinheit mit der elektronischen Bremssteuereinrichtung verbindbar.

Gemäß einer weiteren Ausführungsform der Erfindung ist die Steuereinheit mit einem Kühlgerät verbunden, wobei Betriebsgrößen des Kühlgeräts über die Steuereinheit veränderbar sind.

Gemäß der Erfindung sind Sensoren vorgesehen, die Fahrwerksdaten an die Steuereinheit weitergeben.

Für die Sensoreinheiten bzw. die Aktuatoreinheiten sind dabei eine Vielzahl von Steuerungen bzw. Erfassungen denkbar. So können beispielsweise Temperatursensoren über die zweite Schnittstelle, die beispielsweise als One-Wire-Bus ausgebildet ist, verbunden werden. Türsensoren beispielsweise einer Hecktüre, ein Schließsystem für Türen, ein Ankoppelsensor, ein Füllstandssensor oder eine Tankanzeige können über ein LIN-Bus mit der Steuereinheit verbunden werden. Darüber hinaus ist es vorgesehen, eine Verbindung der Steuereinheit mit einem Kühlgerät über einen CAN-Bus als erste Schnittstelle zu schaffen. Die erste Schnittstelle könnte auch als Verbindung zu einer elektronischen Bremssteuereinrichtung herangezogen werden.

Neben derartigen Telemetriedaten ist es auch möglich, beispielsweise eine Steuerung des Kältegerätes oder auch eine Achslasterfassung mittels der Steuereinheit durchzuführen. Zur Erfassung der Daten können dabei Sensoreinheiten verwendet werden, die unabhängig und teilweise parallel zu den Sensoreinheiten der elektronischen Bremssteuereinrichtung am Nutzfahrzeug angeordnet werden. Demnach kann die Steuereinheit nun Daten empfangen, die andernfalls lediglich in der elektronischen Bremssteuereinheit vorliegen und oftmals nicht über ein Bussystem auslesbar sind. Je nach zu erfassenden Daten werden dabei erste und zweite sowie eventuell auch weitere Schnittstellen verwendet, was ein kosteneffizientes Bereitstellen eines großen Funktionsumfangs der Steuereinheit zur Folge hat.

Neben den bereits erwähnten drahtgebundenen Schnittstellen ist es darüber hinaus auch vorgesehen, weitere nicht drahtgebundene Funk-Schnittstellen an der Steuereinheit vorzusehen. So können beispielsweise mittels einer Übertragung im ISM-Band Drucksensoren aktuelle Werte eines Reifendrucks übertragen. Desweiteren kann die drahtlose Schnittstelle auch einem Übertragungsprotokoll gemäß eines WLAN-Standards oder GSM-Standards ausgebildet sein, so dass eine automatische Pannenrufmöglichkeit besteht, sowie eine Dateneingabe bzw. Datenauslese über ein tragbares Mobilgerät möglich wird. Dazu kann eine entsprechende Authentifizierung notwendig sein, so dass kein unberechtigter Zugriff auf den Nutzfahrzeuganhänger möglich ist.

Nachfolgend werden einige Ausführungsbeispiele anhand der Zeichnung näher erläutert. Es zeigt:

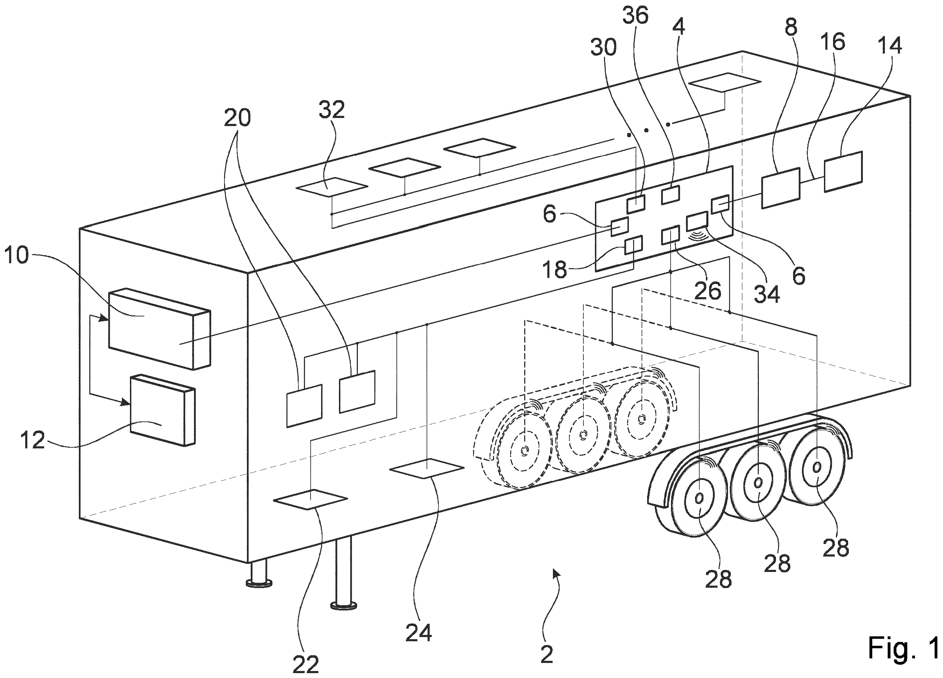

- Fig. 1: eine Seitenansicht eines Nutzfahrzeuganhängers mit einem Blockdiagramm.

In der Figur sind gleiche oder funktional gleichwirkende Bauteile mit den gleichen Bezugszeichen versehen.

In Fig. 1 ist in einer Seitenansicht ein Nutzfahrzeuganhänger 2 gezeigt, wobei in Form eines Blockdiagramms Komponenten zur Verbindung mit einer Steuereinheit in Form eines Blockdiagramms eingezeichnet sind. Die Steuereinheit 4 verfügt dabei über eine erste Schnittstelle 6, die im gezeigten Beispiel als CAN-Bus ausgebildet ist. Der CAN-Bus kann beispielsweise mit einer elektronischen Bremssteuereinrichtung 8 oder einem Kühlgerät 10 verbunden sein. Desweiteren ist es vorgesehen, das Kühlgerät 10 über den CAN-Bus 6 mit einem Drucker 12 zu verbinden. Die elektronische Bremssteuereinrichtung 8 ist beispielsweise über eine standardisierte Schnittstelle 14 mittels der Verbindung 16 mit einer Zugmaschine (nicht in Fig. 1 gezeigt) verbindbar.

Über eine zweite Schnittstelle 18, die beispielsweise als LIN-Bus ausgeführt sein kann, ist die Steuereinheit 4 mit weiteren Sensoren 20, einer Tankanzeige 22 sowie einer Flüssigkeitsmessung innerhalb eines Tanks 24 verbindbar. Desweiteren ist die Steuereinheit 4 über eine weitere Schnittstelle 26 mit entsprechenden Sensoreinheiten für die Generierung von Fahrwerksdaten verbunden. Dies ist schematisch anhand von Verschleißsensoren einer Bremsanlage anhand der Sensoren 28 gezeigt. Eine weitere Schnittstelle 30, die beispielsweise als One-Wire-Bus ausgeführt sein kann, verbindet die Sensoreinheit 4 mit einer Vielzahl von Temperatursensoren 32.

Darüber hinaus weist die Sensoreinheit 4 eine nicht drahtgebundene Schnittstelle 34 auf, die beispielsweise im ISM-Band Funkdaten von Reifendrucksensoren (nicht in Fig. 1 gezeigt) empfangen kann. Zur Verbindung mit einem Mobiltelefon oder dergleichen kann die Steuereinheit 4 mit einer WLAN-Schnittstelle oder einer GSM-Schnittstelle versehen sein, die in Fig. 1 mit dem Bezugszeichen 36 angedeutet ist.

Die Steuereinheit 4 kann somit Daten aus unterschiedlichen Quellen aufnehmen bzw. unterschiedliche Steueraufgaben wahrnehmen, wobei Sensoren auch unabhängig von einer elektronischen Bremssteuereinrichtung direkt mit der Sensoreinheit 4 verbunden sein können. Die elektronische Bremssteuereinrichtung 8 wird daher typischerweise nur zur Bereitstellung von elektrischer Energie benutzt werden, so dass die Programmierung des Funktionsumfangs am Nutzfahrzeuganhänger 2 unabhängig von der Funktionalität der elektronischen Bremssteuereinrichtung durchgeführt werden kann. Da für einfache Verbindungsprotokolle keine aufwändigen Bussysteme bereitgestellt werden müssen, ist die erfindungsgemäße Steuereinheit 4 auch mit einer Vielzahl von Sensoreinheiten kosteneffizient verbindbar.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Nutzfahrzeuganhänger mit einer Steuereinheit (4), die unabhängig von einer elektronischen Bremssteuereinrichtung (8) ausgebildet ist und mit mehreren Sensoreinheiten (20, 28, 32) zur Erfassung von Daten oder Aktuatoreinheiten zur Ansteuerung mittels Daten verbunden ist, wobei zur Ankopplung der Sensoreinheiten (20, 28, 32) oder Aktuatoreinheiten wenigstens zwei unterschiedliche drahtgebundene Schnittstellen (18, 26, 30) an der Steuereinheit (4) vorgesehen sind, die eine Übertragung von Daten mit unterschiedlich komplexen Protokollen ermöglichen, wobei die Steuereinheit (4) mit der elektronischen Bremssteuereinrichtung (8) verbunden ist und **dadurch gekennzeichnet, dass** Sensoreinheiten (20, 28, 32), die Fahrwerksdaten an die Steuereinheit weitergeben, unabhängig von der elektronischen Bremssteuereinrichtung (8) direkt mit der Steuereinheit (4) verbunden sind .

2. Nutzfahrzeuganhänger nach Anspruch 1, bei dem als erste Schnittstelle ein CAN-Bus und als zweite Schnittstelle ein LIN-Bus oder ein ONE-WIRE-Bus vorgesehen sind.

3. Nutzfahrzeuganhänger nach Anspruch 1 oder 2, bei dem darüber hinaus weitere drahtgebundene Schnittstellen vorgesehen sind.

4. Nutzfahrzeuganhänger nach einem der Ansprüche 1 bis 3, bei dem darüber hinaus eine oder mehrere Drahtlos-Schnittstellen (34) an der Steuereinheit (4) vorgesehen sind.

5. Nutzfahrzeuganhänger nach Anspruch 4, bei dem die Drahtlos-Schnittstelle (34) nach einem WLAN- oder GSM-Protokoll arbeitet oder zur Übertragung von Sensordaten im ISM-Band vorgesehen ist.

6. Nutzfahrzeuganhänger nach einem der Ansprüche 1 bis 5, bei dem die Sensoreinheiten als ein oder mehrere Temperatursensoren (32), als Koppelsensor, als Türsensor, als Füllstandssensor, als Reifendrucksensor oder als Verschleißsensor für Bremsbeläge bereitgestellt sind.

7. Nutzfahrzeuganhänger nach einem der Ansprüche 1 bis 6, bei dem die Aktuatoreinheit über die Steuereinheit (4) aktivierbar ist.

8. Nutzfahrzeuganhänger nach Anspruch 7, bei der die Aktuatoreinheit eine Hecktürverriegelung ist.

9. Nutzfahrzeuganhänger nach einem der Ansprüche 1 bis 8, bei der die Steuereinheit (4) mit einem Kühlgerät (10) verbunden ist, wobei Betriebsgrößen des Kühlgeräts (10) über die Steuereinheit (4) veränderbar sind.

10. Nutzfahrzeuganhänger nach einem der Ansprüche 1 bis 9, bei dem Sensoren vorgesehen sind, die unabhängig und teilweise parallel zu den Sensoreinheiten der elektronischen Bremssteuereinrichtung (8) angeordnet werden.

## Claims

1. Commercial vehicle trailer comprising a control unit (4) which is designed independently of an electronic brake control means (8) and is connected to a plurality of sensor units (20, 28, 32) for recording data or actuator units for controlling by means of data, at least two different wired interfaces (18, 26, 30) being provided on the control unit (4) for coupling the sensor units (20, 28, 32) or actuator units, which interfaces allow data to be transmitted using protocols of different complexity, the control unit (4) being connected to the electronic brake control means (8) and **characterized in that** sensor units (20, 28, 32) which forward chassis data to the control unit are connected directly to the control unit (4) independently of the electronic brake control means (8).

2. Commercial vehicle trailer according to claim 1, wherein a CAN bus is provided as the first interface and a LIN bus or a ONE-WIRE bus is provided as the second interface.

3. Commercial vehicle trailer according to either claim 1 or claim 2, wherein further wired interfaces are also provided.

4. Commercial vehicle trailer according to any of claims 1 to 3, wherein one or more wireless interfaces (34) are also provided on the control unit (4).

5. Commercial vehicle trailer according to claim 4, wherein the wireless interface (34) works according to a WLAN or GSM protocol or is provided for transmitting sensor data in the ISM band.

6. Commercial vehicle trailer according to any of claims 1 to 5, wherein the sensor units are provided as one or more temperature sensors (32), as a coupling sensor, as a door sensor, as a fill level sensor, as a tire pressure sensor or as a wear sensor for brake pads.

7. Commercial vehicle trailer according to any of claims 1 to 6, wherein the actuator unit can be activated via the control unit (4).

8. Commercial vehicle trailer according to claim 7, wherein the actuator unit is a tailgate lock.

9. Commercial vehicle trailer according to any of claims 1 to 8, wherein the control unit (4) is connected to a cooling device (10), it being possible to change operating variables of the cooling device (10) via the control unit (4).

10. Commercial vehicle trailer according to any of claims 1 to 9, wherein sensors are provided which are arranged independently and partly in parallel with the sensor units of the electronic brake control means (8).

## Revendications

1. Remorque de véhicule utilitaire comportant une unité de commande (4), qui est conçue indépendamment d'un dispositif de commande de freinage électronique (8) et est reliée à plusieurs unités de capteur (20, 28, 32) pour l'enregistrement de données ou à des unités d'actionnement pour la commande au moyen de données, au moins deux interfaces filaires (18, 26, 30) différentes étant prévues sur l'unité de commande (4) pour le couplage des unités de capteur (20, 28, 32) ou des unités d'actionnement, lesquelles interfaces filaires permettent la transmission de données utilisant des protocoles de complexités différentes, l'unité de commande (4) étant reliée au dispositif de commande de freinage électronique (8) et **caractérisée en ce que**
des unités de capteurs (20, 28, 32), lesquelles transmettent des données de châssis à l'unité de commande, sont reliées directement à l'unité de commande (4) indépendamment du dispositif de commande de freinage électronique (8).

2. Remorque de véhicule utilitaire selon la revendication 1, dans laquelle un bus CAN est prévu comme première interface et un bus LIN ou un bus 1-Wire est prévu comme seconde interface.

3. Remorque de véhicule utilitaire selon la revendication 1 ou 2, dans laquelle d'autres interfaces filaires sont également prévues.

4. Remorque de véhicule utilitaire selon l'une des revendications 1 à 3, dans laquelle une ou plusieurs interfaces sans fil (34) sont également prévues sur l'unité de commande (4).

5. Remorque de véhicule utilitaire selon la revendication 4, dans laquelle l'interface sans fil (34) fonctionne selon un protocole WLAN ou GSM ou est prévue pour la transmission de données de capteur dans la bande ISM.

6. Remorque de véhicule utilitaire selon l'une des revendications 1 à 5, dans laquelle les unités de capteur sont prévues comme un ou plusieurs capteurs de température (32), comme capteur de couplage, comme capteur de porte, comme capteur de niveau, comme capteur de pression des pneus ou comme capteur d'usure pour les plaquettes de frein.

7. Remorque de véhicule utilitaire selon l'une des revendications 1 à 6, dans laquelle l'unité d'actionnement peut être activée par l'intermédiaire de l'unité de commande (4).

8. Remorque de véhicule utilitaire selon la revendication 7, dans laquelle l'unité d'actionnement est un verrou de hayon.

9. Remorque de véhicule utilitaire selon l'une des revendications 1 à 8, dans laquelle l'unité de commande (4) est reliée à un appareil de refroidissement (10), des paramètres de fonctionnement de l'appareil de refroidissement (10) étant variables par l'intermédiaire de l'unité de commande (4).

10. Remorque de véhicule utilitaire selon l'une des revendications 1 à 9, dans laquelle sont prévus des capteurs, lesquels sont disposés indépendamment et partiellement parallèles aux unités de capteur du dispositif de commande de freinage électronique (8).
